# EUROPEAN PATENT SPECIFICATION

(11) **EP 1 247 039 B1**
(45) Date of publication and mention of the grant of the patent: **02.11.2005**
(21) Application number: 01994947.8
(22) Date of filing: 19.12.2001
(51) Int. Cl.: F16L 19/08, F16L 19/12

(54) **IMPROVED TUBE FITTING SEALING MEMBER**
VERBESSERTES DICHTELEMENT FÜR ROHRVERBINDUNG
ELEMENT D'ETANCHEITE AMELIORE D'UN RACCORD FILETE

(30) Priority: 19.01.2001 IT MI20010100
(43) Date of publication of application: 09.10.2002
(73) Proprietor: Larga S.p.a., 23875 Osnago (Lecco) (IT)
(72) Inventor: CAZZANIGA, Franco, I-23807 Merate (IT)
(74) Representative: Carloni, Franco
(86) International application number: PCT/IT2001/000642
(87) International publication number: WO 2002/057678

(56) References cited:
- WO-A-93/25837
- DE-A- 4 219 722
- FR-A- 2 346 617
- US-A- 2 529 552

## Description

The present invention generally relates to metal tube fittings of the kind used in hydraulic systems for connecting a metal tube to a hydraulic device, e.g. a pump, a valve, a distributor and other devices.

Tube fittings of the above-mentioned kind are known in the art, f.i. in connection with the German Standards DIN 2353 and the International Standards ISO 8434-1 or with regard to other devices for similar applications. The above-mentioned tube fittings comprise an assembly body having an exterior thread and an interior bore which is adapted to receive the end section of a metal tube to be connected, a cutting ring or, alternatively, a compression sleeve through which the end section of the tube is to be inserted, and a clamping nut arranged around the end section of the tube and adapted to threadedly co-operate with the assembly body for the purpose of firmly connecting the metal tube to the hydraulic device.

A cutting ring is generally provided with an outer tapered front surface and an outer tapered rear surface which, at the time the tube fitting is assembled, co-operate with an inner tapered surface of the bore in the assembly body and with an inner tapered surface of the clamping nut, respectively, for causing the front portion and the rear portion, respectively, of the cutting ring to exert an inward pressure on the exterior surface of the tube to be connected.

At its interior front portion, the cutting ring is provided with one or more sharp annular edges, the so called "cutting edges", which penetrate the exterior surface of the tube when assembling the tube fitting, as a result of the inward pressure exerted thereon by the cutting ring, until they reach a depth necessary to assure that the tube is not drawn out from the tube fitting as a result of the force exerted by the pressurised fluid.

A compression sleeve differs from a cutting ring in that it is provided at its interior front and rear portions with radially inwardly projecting teeth which, at the time the tube fitting is assembled, are pressed against the exterior surface of the end section of the tube to be connected for the purpose of securing the tube and preventing it from being drawn out from the tube fitting as a result of the force exerted by the pressurised fluid.

Arrangements of the kind described above are also known, f.i. from patent US 2 529 552, wherein the cutting ring or compression sleeve is surrounded by a rubber member upon which compression forces are exerted by the tube fitting parts. These arrangements are intended to increase the ability of the tube fitting to resist failure from pressure impulse and vibrations.

The object of the present invention is to provide an improved sealing member to be used with tube fittings comprising a cutting ring or compression ring which improves the known arrangements.

According to the present invention, a sealing member is provided which is formed of a tight-fitting sleeve member having a front end portion in the form of a radially inwardly diverted rim, a rear end portion in the form of an enlarged, substantially rectangular, radially outwardly projecting rim and a tubular wall portion provided intermediate the front and rear end portions.

For a better understanding of the features of the sealing member according to the present invention, a description thereof will now be given by way of example and therefore not intended in a limiting sense, with reference to the application of such a sealing member to a tube fitting provided with a cutting ring. Obviously, the features of the sealing member will be similar to those hereinafter disclosed also in the case of its application to a tube fitting provided with a compression sleeve.

### BRIEF DESCRIPTION OF DRAWINGS

With reference to the accompanying drawings:
Figure 1 is an exploded longitudinal partial sectional view of the members of a tube fitting incorporating a cutting ring provided with a sealing member according to the present invention;
Figure 2 is a longitudinal partial sectional view of the tube fitting of Figure 1 after a pre-assembly step;
Figure 3 is an enlarged view of Figure 2;
Figure 4 is a longitudinal partial sectional view of the tube fitting of Figure 1 after the assembly step; and
Figure 5 is an enlarged view of Figure 4.

### BEST MODE FOR CARRYING OUT THE INVENTION

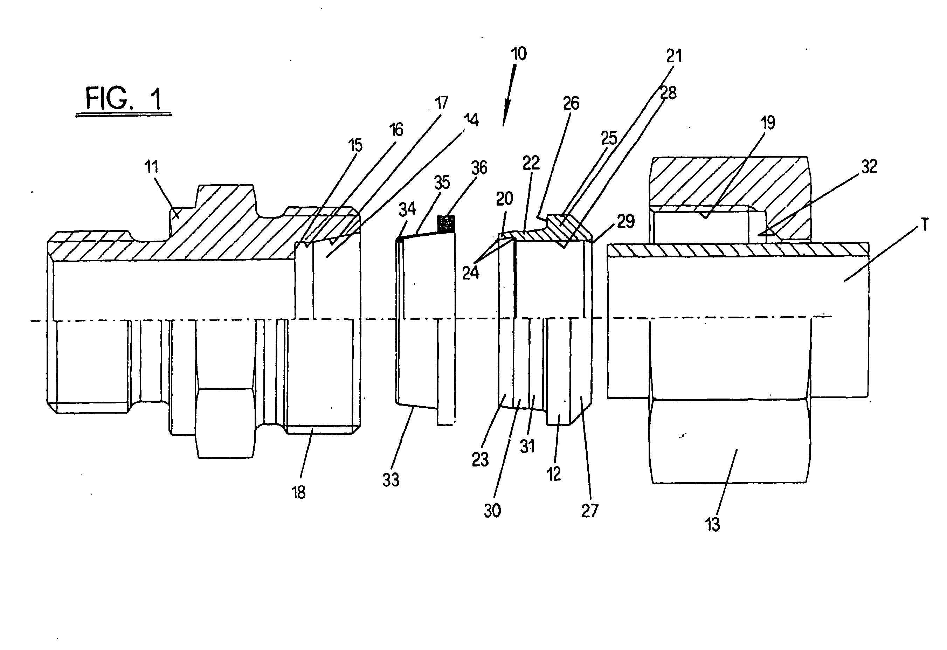

Referring to Figure 1 of the drawings, there is depicted in a pre-assembled configuration a metal tube fitting, generally designated by 10, and incorporating a cutting ring with a sealing member according to the present invention. The tube fitting 10 comprises, in a manner known per se, an assembly body 11 to which the end section of a tube T is to be connected, a cutting ring 12 arranged on the end section of the tube T and a clamping nut 13 also arranged on the end section of the tube T and intended to be secured to the assembly body I 1 by means of a threaded connection.

The assembly body 11 is provided with an inner bore 14 adapted to receive the end section of the tube T. The bore 14 comprises an abutment surface portion 15 for the end section of the tube T, a cylindrical surface portion 16 slightly larger in diameter than the outside diameter of the tube and a tapered surface portion 17 which is connected to the cylindrical surface portion 16 and becomes gradually greater in diameter towards the end of the assembly body 11 facing the clamping nut 13.

The assembly body 11 is provided with an outer threaded portion 18 which is to be engaged by a threaded portion 19 of the clamping nut 13 in assembling the tube fitting 10.

The cutting ring 12 comprises a front portion facing the assembly body 11, a rear portion 21 facing the clamping nut 13 and a central portion 22 intermediate between said front portion 20 and rear portion 21 and facing the assembly body 11 as well.

The front portion 20 of the cutting ring 12 is provided with an outer tapered surface 23 and with one or more inner annular sharp edges or "cutting edges" 24.

The rear portion 21 of the cutting ring 12 is provided with a shoulder 25 which projects outwardly radially forming a sealing surface 26 facing the assembly body 11 and a tapered surface 27 facing the clamping nut 13. The rear portion 21 of the cutting ring 12 is provided with an inner cylindrical surface 28 terminating in a flaring end portion facing the clamping nut.

The central portion 22 of the cutting ring 12 is provided with an outer cylindrical surface 30 joining on the one side the tapered surface 23 of the front portion 20 of the cutting ring 12, and on the other side the sealing surface 26 of the shoulder 25. Though not necessary, it is preferable that the cylindrical surface 30 is indirectly joined to the sealing surface 26 of the shoulder 25 by means of a tapered surface 31. On its interior, the central portion 22 of the cutting ring 12 is provided with a cylindrical surface formed as a continuation of the cylindrical surface 28 of the rear portion 21 of the cutting ring 12 towards the cutting edges 24 located in the front portion 20 of said cutting ring 12.

The clamping nut 13 is provided with an inner threaded portion 19 adapted to engage the threaded portion 18 of the assembly body 11 for permitting the tube fitting members to be joined together. Furthermore, the clamping nut 13 is provided with an inner tapered surface 32 adapted to co-operate with the tapered surface 27 on the rear portion 21 of the cutting ring 12.

As can be seen from Figure 1 of the drawings, the peculiar feature of the tube fitting according to the present invention, which distinguishes it from the other known tube fittings of the same kind, consists in that a tight-fitting sealing sleeve member 33 is associated with the cutting ring 12 for the purpose of improving the fluid tightness of the tube fitting, both at high and low operating pressures, and to dampen the vibrations which are transmitted in use from one member of the tube fitting to another. Hereinafter it will be shown how the tight-fitting sleeve sealing member 33 associated with a standard cutting ring 12 permits the above objects to be achieved.

The tight-fitting sealing sleeve member 33 is preferably made of an elastomeric, thermoplastic or, alternatively, thermosetting material and preferably, although not necessarily, its shape in the longitudinal direction mates that of the tapered surface portion 17 of the bore 14 in the assembly body 11.

The tight-fitting sealing sleeve member 33 is intended to be removably arranged on the cutting ring 12 and to cover on the outside the front portion 20 and the central portion 22 thereof, i.e. those portions of the cutting ring 12 facing the assembly body 11. The tight-fitting sealing sleeve member is provided with an inwardly radially diverted rim 34 in its front end portion. The rim 34 of the tight-fitting sealing sleeve member 33 forms a portion of added material intended to be compressed in the space defined by the front portion of the cutting ring 12, the exterior surface of the end section of the tube T to be connected and the bore 14 in the assembly body 11 which receives the end section of the tube T. As will be apparent in the following, as a result of the compression force, the portion of added material is deformed and fills the cavity formed by the above-mentioned members of the tube fitting so as to seal the front portion of the cutting ring 12. Furthermore, the so configured front rim 34 of the tight-fitting sealing sleeve member 33 forms an abutment stop as it terminates against the front portion of the cutting ring 12 when the tight-fitting sealing sleeve member is fitted thereon, thus allowing for a correct assembly thereof.

As hereinabove disclosed, the tight-fitting sealing sleeve member 33 is intended to cover on the outside the front portion 20 and the central portion 22 of the cutting ring 12. To this purpose, the tight-fitting sealing sleeve member 33 is provided with a tubular wall 35 adapted to cover the above-mentioned portions of the cutting ring 12. The tubular wall 35 of the tight-fitting sealing sleeve member performs a sealing action against fluid leakage and also a vibration dampening action since, in the assembly operation of the tube fitting, it is intended to be inserted and compressed by the tapered surface portion 17 of the bore 14 in the assembly body 11 which receives the tube to be connected and by the front and rear portions 20,21 of the cutting ring 12, and to be deformed upon such compression so as to penetrate the surface unevenness and defects of said contacting members of the tube fitting for the purpose of forming a sealing and vibration dampening cover layer therebetween.

At its rear end portion, the tight-fitting sealing sleeve member 33 is provided with an enlarged and substantially rectangular in shape rim 36 projecting radially outwardly and serving as a support for the tight-fitting sealing sleeve member 33 when the latter is fitted onto the cutting ring 12. This rim 36 performs a co-operative action in assuring fluid tightness of the tube fitting and in dampening the vibrations transmitted from one member thereof to another. As a matter of fact, during the assembly operation of the tube fitting, the rim 36 of the tight-fitting sealing sleeve member 33 is interposed between and compressed by the assembly body 11 and by the sealing surface 26 of the shoulder 25 of the cutting ring 12 so as to stop up the otherwise empty space usually existing between these members of the tube fitting and to dampen the vibrations transmitted therebetween.

The assembly operation of the tube fitting 10 provided with the tight-fitting sealing sleeve member 33 according to the present invention is carried out through a sequence of steps which substantially do not differ from those followed in the assembly of similar standard tube fittings known in the art which, however, do not include a tight-fitting sealing sleeve member as hereinabove disclosed.

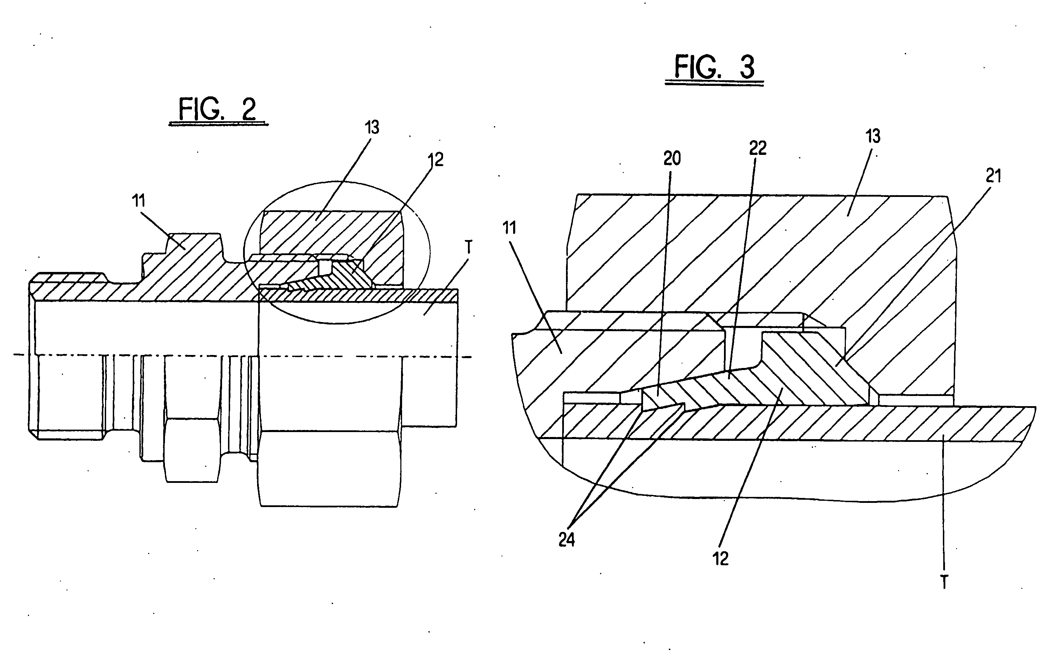

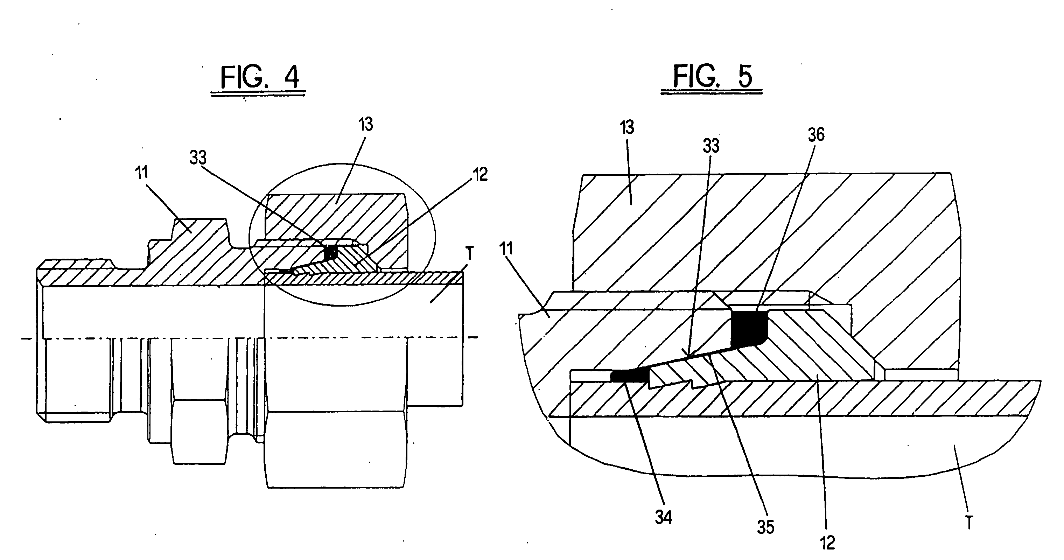

In a first step or pre-assembly step, the tube fitting 10 according to the present invention is assembled without the tight-fitting sealing sleeve member 33. During this pre-assembly step of the tube fitting 10, while being screwed onto the assembly body 11, the clamping nut 13 urges the cutting ring 12 towards the assembly body 11 so that the tapered surface 23 on the front portion 20 of the cutting ring 12 slides along the tapered surface portion 17 of the bore 14 in the assembly body and co-operates therewith to cause the front portion 20 of the cutting ring 12 to be compressed against the exterior surface of the end section of the tube T to be connected, and thus to cause the cutting edges 24 of the cutting ring 12 to penetrate said surface. The cutting edges 24 penetrate the exterior surface of the tube T to be connected until they reach a depth necessary to assure that the tube can resist the force exerted by the pressurised fluid which tends to draw the tube out from the tube fitting. At the end of this pre-assembly step, the tube fitting 10 is in the configuration illustrated in Figures 2 and 3 of the drawings.

In a second step, the tube fitting is disassembled for the purpose of checking the evenness of the cut made by the cutting edges 24 in exterior surface of the tube T to be connected. The tight-fitting sealing sleeve member 33 is then fitted onto the cutting ring 12 and the tube fitting 10 is then assembled once again. During this second step of the assembly operation, the displacement of cutting ring 12 toward the assembly body 11 by the action of the clamping nut 13 causes the front rim 34 of the tight-fitting sealing sleeve member 33 to be compressed by the bore 14 in the assembly body 11, by the exterior surface of the tube T to be connected and by the front portion 20 of the cutting ring 12. As can be seen in Figures 4 and 5 of the drawings, as a result of such compression, the front rim 34 of the tight-fitting sleeve member 33 is deformed and stops up the existing space among said members of the tube fitting which otherwise would be empty.

As can be seen from Figures 4 and 5 of the drawings, during the second assembly step, the wall 35 of the tight-fitting tubular sealing member 33 is interposed between and compressed by the tapered surface portion 17 of the recessed portion 14 of the assembly body 11 and by the tapered surface 23 and by the cylindrical surface 30 of the front portion 20 and the central portion 22, respectively, of the cutting ring 12. The compressed wall 35 is deformed so as to assume the configuration of a sealing and dampening material layer intermediate between the assembly body 11 and the portion of cutting ring 12 facing said assembly body 11.

From Figures 4 and 5 of the drawings it can also be seen that the rear rim 36 of the tight-fitting sealing sleeve member 33 is interposed between and compressed by the assembly body 11 and by the sealing surface 26 of the shoulder 25 of the cutting ring 12 so as to perform a leakage sealing and vibration dampening action between the assembly body 11 and the cutting ring 12.

From the foregoing, it is apparent that the tight-fitting sealing sleeve member 33, when associated with a cutting ring or compression sleeve 12, permits the objects of the present invention to be attained. In particular, it permits the fluid tightness and vibration resistance of the tube fitting to be greatly improved. As a matter of fact, the tight-fitting sealing sleeve member 33 performs a leakage sealing and vibration dampening action in three of the different regions of the cutting ring or the compression sleeve 12 facing the assembly body, and namely: the front portion 20, the central portion 22 and the sealing surface 26 of the shoulder 25.

The tube fitting provided with the tight-fitting sealing sleeve member according to the present invention also achieves other important advantages.

A first advantage is that the members of the tube fitting, with the exception of the tight-fitting sealing sleeve member 33, are all tube fitting members that comply with the Standards DIN 2353 and ISO 8434-1, and therefore the tight-fitting sealing sleeve member 33 can be used with tube fittings complying with such Standards or in other tube fittings having the features hereinabove described.

A second advantage is that the presence of the tight-fitting sealing sleeve member does not impair the mechanical strength of the cutting ring or the compression sleeve.

## Claims

1. A sealing member formed of a tight-fitting sleeve member (33) having a front end portion in the form of a radially inwardly diverted rim (34), a rear end portion in the form of an enlarged, substantially rectangular, radially outwardly projecting rim (36) and a tubular wall portion (35) provided intermediate the front and rear end portions.

2. The sealing member of claim 1, **characterised in that** the tight-fitting sleeve member (33) is made of an elastomeric, thermoplastic or thermosetting material.

3. A tube fitting (10) comprising a threaded assembly body (11) having therein a bore (14) adapted to receive the end section of a tube (T) to be connected, a cutting ring or compression sleeve (12) through which the end section of the tube (T) is to be inserted, and a clamping nut (13) arranged around the end section of the tube (T) and intended to co-operate with the assembly body (11) for causing the cutting ring or compression sleeve (12) to exert an inward pressure on the exterior surface of the end section of the tube (T), wherein said cutting ring or compression sleeve (12) is provided with the tight-fitting sealing sleeve member (33) according the claim 1, and said tight-fitting sealing sleeve member (33) is removably arranged on the outside portion of the cutting ring or compression sleeve (12) with corresponding shape, facing the assembly body (11)and is shaped to mate the shape of said bore (14) in the assembly body (11), said tight-fitting sealing sleeve member (33) being intended to be compressed when assembling the tube fitting between the assembly body (11), the end section of the tube (T) to be connected and the cutting ring or the compression sleeve (12) so as to assure a fluid-tight seal upon tightening of the tube fitting.

4. The tube fitting of claim 3, **characterised in that** it includes a first space defined by a portion of the cutting ring or compression sleeve (12) facing the assembly body (11), by an exterior surface of the end section of the tube (T) to be connected and by said bore (14) in the assembly body (11) receiving said end section of the tube (T), said space being formed by said members of the tube fitting upon assembly thereof and being filled by said inwardly radially diverted rim (34) at the front end portion of said tight-fitting sealing sleeve member (33).

5. The tube fitting of claim 3, **characterised in that** it includes a second space defined by said assembly body (11) and a sealing surface (26) of the cutting ring or compression sleeve (12), said space being formed by said members of the tube fitting upon assemby thereof and being filled by said radially outwardly projecting rim (36) at the rear end portion of said tight-fitting sealing sleeve member (33).

## Patentansprüche

1. Dichtelement gebildet aus einer dichtpassenden Muffe (33) mit einem vorderen Endteil in der Form eines radial nach innen umgebogenen Randes (34), einem hinteren Endteil in der Form eines aufgeweiteten, im wesentlichen rechteckigen, radial nach außen vorstehenden Randes (36) und einem rohrförmigen Wandteil (35), der zwischen dem vorderen und dem hinteren Endteil vorgesehen ist.

2. Dichtelement nach Figur 1, **dadurch gekennzeichnet, dass** die dichtpassende Muffe (33) aus einem Elastomer, Thermoplast oder einem wärmehärtenden Material gefertigt ist.

3. Rohrverbindung (10) bestehend aus einem Gewindemontagekörper (11) mit einer Bohrung (14) zur Aufnahme des Endteils von einem zu verbindenden Rohr (T), einem Schneidring oder eine Druckbuchse (12), durch die das Endteil von Rohr (T) aufzustecken ist, und einer um den Endteil von Rohr (T) angeordneten Klemmmutter (13) zur Mitwirkung mit dem Montagekörper (11), damit der Schneidring oder die Druckbuchse (12) einen Druck nach innen auf die Außenfläche des Endteils von Rohr (T) ausübt, worin der Schneidring oder die Druckbuchse (12) mit der dichtpassenden Muffe (33) nach Anspruch 1 versehen ist, und die dichtpassende Muffe (33) ist auf dem Außenabschnitt des dem Montagekörper (11) gegenüberliegenden Schneidringes oder Druckbuchse (12) von entsprechender Form abnehmbar angeordnet und ist derart geformt, um auf die Form der Bohrung (14) im Montagekörper (11) zu passen, wobei die dichtpassende Muffe (33) komprimiert wird, wenn die Rohrverbindung zwischen dem Montagekörper (11), der zu verbindende Endabschnitt von Rohr (T) und der Schneidring oder Druckbuchse (12) montiert werden, so dass eine flüssigkeitsdichte Abdichtung beim Befestigen der Rohrverbindung gewährleistet wird.

4. Rohrverbindung nach Anspruch 3, **dadurch gekennzeichnet, dass** sie einen ersten Raum einschließt, der von einem Abschnitt des dem Montagekörper (11) gegenüberliegenden Schneidrings oder Druckbuchse (12), einer Außenfläche des zu verbindenden Endteils von Rohr (T) und der Bohrung (14) im Montagekörper (11), der den Endteil von Rohr (T) aufnimmt, begrenzt ist, wobei der Raum durch die Elemente der Rohrverbindung nach deren Zusammenbau gebildet und mit dem radial nach innen umgebogenen Rand (34) an dem vorderen Endteil der dichtpassenden Dichtungsbuchse (33) ausgefüllt wird.

5. Rohrverbindung nach Anspruch 3, **dadurch gekennzeichnet, dass** sie einen zweiten Raum einschließt, der von dem Montagekörper (11) und einer Dichtfläche (26) des Schneidringes oder Druckbuchse (12) begrenzt wird, wobei der Raum durch die Elemente der Rohrverbindung nach deren Zusammenbau gebildet und mit dem radial nach außen umgebogenen Rand (36) an dem hinteren Endteil der dichtpassenden Dichtungsbuchse (33) ausgefüllt wird.

## Revendications

1. Elément d'étanchéité formé d'un élément (33) de manchon à ajustement serré, ayant une partie d'extrémité avant sous la forme d'un bord (34) dévié radialement vers l'intérieur, une partie d'extrémité arrière sous la forme d'un bord (36) agrandi, sensiblement rectangulaire, en saillie radialement vers l'extérieur et une partie (35) tubulaire de paroi prévue intermédiairement entre les parties d'extrémité avant et arrières.

2. Elément d'étanchéité suivant la revendication 1, **caractérisé en ce que** l'élément (33) de manchon à ajustement serré est en une matière élastomère, thermoplastique ou thermodurcissable.

3. Raccord (10) de tuyau, comprenant un corps (11) fileté de montage ayant un alésage (14) conçu pour recevoir le tronçon d'extrémité d'un tube (T) à raccorder, un anneau de coupe ou un manchon (12) de compression, par lequel le tronçon d'extrémité du tube (T) doit être inséré et un écrou (13) de serrage monté autour du tronçon d'extrémité du tube (T) et destiné à coopérer avec le corps (11) de montage pour faire que l'anneau de coupe ou le manchon (12) de compression exerce une pression vers l'intérieur sur la surface extérieure du tronçon d'extrémité du tube (T), dans lequel l'anneau de coupe ou le manchon (12) de compression est muni de l'élément (33) de manchon d'étanchéité à ajustement serré suivant la revendication 1, et l'élément (33) de manchon d'étanchéité à ajustement serré est monté amovible sur la partie extérieure de l'anneau de coupe ou du manchon (12) de compression de forme correspondante faisant face au corps (11) de montage et est conformé pour épouser la forme de l'alésage (14) du corps (11) de montage, l'élément (33) de manchon d'étanchéité à ajustement serré étant destiné à être comprimé lorsque le raccord de tube est monté entre le corps (11) de montage, le tronçon d'extrémité du tube (T) à raccorder et l'anneau de coupe ou le manchon (12) de compression de manière à assurer une étanchéité étanche au fluide en serrant le raccord de tuyau.

4. Raccord de tuyau suivant la revendication 3, **caractérisé en ce qu'**il comprend un premier espace défini par une partie de l'anneau de coupe ou du manchon (12) de compression faisant face au corps (11) de montage, par une surface extérieure du tronçon d'extrémité du tube (T) à raccorder et par l'alésage (14) du corps (11) de montage recevant le tronçon d'extrémité du tube (T), l'espace étant formé par les éléments du raccord de tuyau après son assemblage et étant rempli par le bord (34) déviant radialement vers l'intérieur à la partie d'extrémité avant de l'élément (33) de manchon d'étanchéité à ajustement serré.

5. Raccord de tuyau suivant la revendication 3, **caractérisé en ce qu'**il comprend un deuxième espace défini par le corps (11) de montage et une surface (26) d'étanchéité de l'anneau de coupe ou du manchon (12) de compression, cet espace étant formé par les éléments du raccord de tuyau après son assemblage et étant rempli par le bord (36) en saillie radialement vers l'extérieur à la partie d'extrémité arrière de l'élément (33) de manchon d'étanchéité à ajustement serré.
